# EUROPÄISCHE PATENTANMELDUNG

(11) **EP 1 308 261 A1**
(43) Veröffentlichungstag der Anmeldung: **07.05.2003**
(21) Anmeldenummer: 02020736.1
(22) Anmeldetag: 14.09.2002
(51) Int. Cl.: B29C 45/72

(54) **Kunststoff-Spritzgiessmaschine mit Abwärmerückgewinnung**

(30) Priorität: 31.10.2001 DE 10153704
(71) Anmelder: Krauss-Maffei Kunststofftechnik GmbH, 80997 München (DE)
(72) Erfinder: Bauer, Markus, 80997 München (DE); Würtele, Martin, 86316 Friedberg (DE); Bürkle, Erwin, 83671 Benediktbeuern (DE); Hörl, Helmut, 82194 Gröbenzell (DE)
(74) Vertreter: Zollner, Richard

(57) **Zusammenfassung**

Bei einer Kunststoff-Spritzgießmaschine mit einem beheizten Plastifizierzylinder (10) für das zu verspritzende Kunststoffmaterial und einem mit diesem befüllbaren Spritzgießwerkzeug (2) einschließlich eines Maschinenantriebs (14, 20) wird erfindungsgemäß eine hocheffiziente Energierückgewinnung dadurch erreicht, daß die bei der Kühlung des Maschinenantriebs anfallende Abwärme über ein Wärmetransportsystem (24) dem Granulattrichter (12) des Plastifizierzylinders zugeführt und dort zur Erhöhung der Rohstoff-Eingangstemperatur genutzt wird.

## Beschreibung

Die Erfindung bezieht sich auf eine Kunststoff-Spritzgießmaschine, nach dem Oberbegriff des Patentanspruchs 1.

Aus der DE 41 20 403 C2 ist eine Spritzgießmaschine dieser Art mit einem taktweise in wechselnder Folge beheizten und gekühlten Spritzgießwerkzeug bekannt, bei welcher die Abwärme des Maschinenantriebs zum Heizen des Spritzgießwerkzeugs verwendet wird. Während aber das Spritzgießwerkzeug möglichst rasch auf ein hohes Temperaturniveau erwärmt werden muß und mithin einer kurzzeitig hochbelastbaren Wärmequelle bedarf, liefert der Maschinenantrieb unabhängig vom Heiz- und Kühltakt des Spritzgießwerkzeugs eine relativ gleichmäßige Wärmemenge, und diese auch noch auf einem für eine schnelle Erhitzung des Spritzgießwerkzeugs unzureichenden Temperaturniveau, so daß eine Abwärmenutzung nur in begrenztem Umfang und mit zusätzlichem Heizenergieaufwand möglich ist.

Ferner ist bei einer Spritzgießmaschine der eingangs genannten Art vorgeschlagen worden, mit einem zuvor im Wärmeschutzmantel des Plastifizierzylinders erwärmten Luftstrom das Kunststoffmaterial in einem dem Plastifizierzylinder vorgeschalteten Granulatspeicher zu trocknen. Dabei kann jedoch nur ein Bruchteil der dem Luftstrom zugeführten Wärmemenge durch die Isolationsverluste des Wärmeschutzmantels gedeckt, der übrige Teil hingegen muß durch einen vermehrten Nutzwärmeentzug des Plastifizierzylinders aufgebracht werden, so daß die beim Trockenvorgang erzielte Energieersparnis durch einen entsprechend erhöhten Energieverbrauch der Zylinderheizung erkauft wird.

Aufgabe der Erfindung ist es, eine Spritzgießmaschine der eingangs genannten Art so auszubilden, daß der Energieverbrauch signifikant verringert wird.

Diese Aufgabe wird erfindungsgemäß durch die im Patentanspruch 1 gekennzeichnete Spritzgießmaschine gelöst.

Erfindungsgemäß wird eine äußerst effektive Abwärmenutzung vollständig ohne aufwendige Zwischenspeicher oder zusätzlichen Energieverbrauch dadurch erreicht, daß das Kunststoffgranulat einlaßseitig des Plastifizierzylinders mit Hilfe des beanspruchten Wärmetransportsystems unmittelbar und kontinuierlich mit der Abwärme des Maschinenantriebs vorerhitzt und auf diese Weise nicht nur der zum Aufschmelzen erforderliche Heizenergieverbrauch des Plastifizierzylinders signifikant verringert, sondern auch die Aufschmelzlänge des Plastifizierzylinders verkürzt und wegen des damit verbundenen, geringeren Druckanstiegs im Bereich der Aufschmelzzone zugleich die Leistungsausbeute des Plastifizierantriebs erheblich verbessert wird.

Wenn, wie nach Anspruch 2 bevorzugt, der Maschinenantrieb eine zentrale, elektro-hydraulische Motor-Pumpeneinheit enthält, wird das Wärmetransportsystem zweckmäßigerweise mit der Abwärme der Motor-Pumpeneinheit beheizt.

In wetterer, besonders bevorzugter Ausgestaltung der Erfindung wird der Schneckenantrieb des Plastifizierzylinders nach Anspruch 3 im Bereich des einlaßseitigen Zylinderendes ebenfalls durch das Wärmetransportsystem gekühlt, wodurch die Abwärmenutzung weiter verbessert und der Schneckenantrieb wirksam gegen eine Überhitzung geschützt wird.

Gemäß Anspruch 4 erfolgt das Vorheizen des Kunststoffmaterials in besonders bevorzugter, konstruktiv einfacher Weise im Einfülltrichter des Plastifizierzylinders, und nach Anspruch 5 ist das Wärmetransportsystem im Hinblick auf eine einfache und thermisch günstige Gestaltung zweckmäßigerweise als im geschlossenen Kreislauf wasserdurchströmtes Rohrsystem ausgebildet.

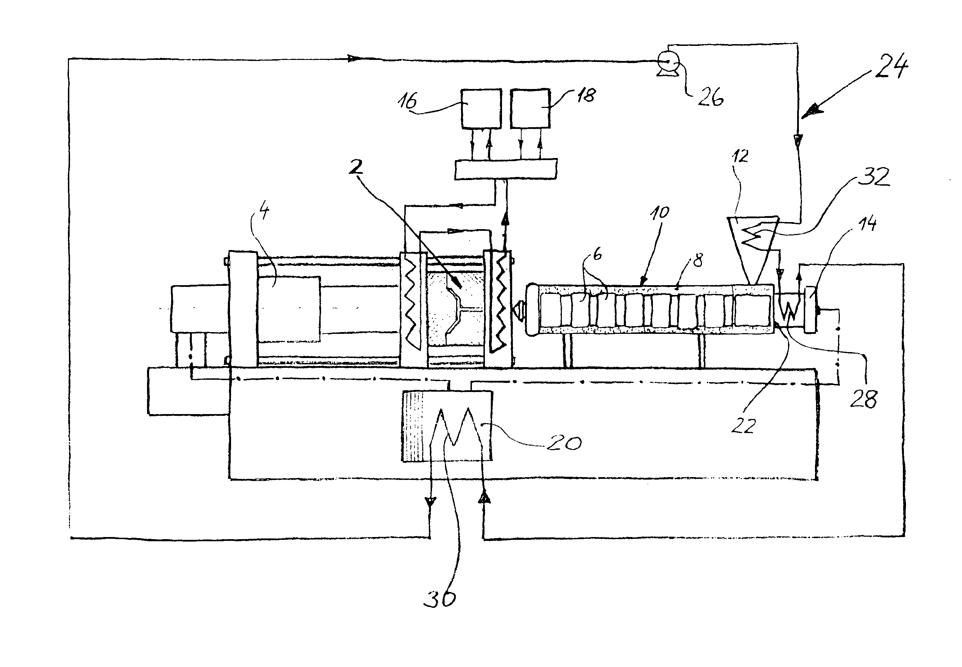

Die Erfindung wird nunmehr anhand eines Ausführungsbeispiels in Verbindung mit der Zeichnung näher erläutert: Diese zeigt in stark schematisierter Darstellung eine Kunststoff-Spritzgießmaschine mit einem Wärmetransportsystem zur Energierückgewinnung

Die in der Zeichnung dargestellte Kunststoff-Spritzgießmaschine enthält als Hauptbestandteile ein mit aufgeschmolzenem Kunststoffmaterial befüllbares Spritzgießwerkzeug 2, welches mittels eines hydraulischen Stellantriebs 4 taktgesteuert geschlossen und geöffnet wird, sowie einen von Heizelementen 6 umgebenen und nach außen durch einen Wärmeschutzmantel 8 isolierten Plastifizierzylinder 10 einschließlich eines Einfülltrichters 12, über den thermoplastisches Kunststoffgranulat in den Plastifizierzylinder 10 eingegeben und in diesem anschließend unter der Wärmeeinwirkung der Heizelemente 6 aufgeschmolzen und mit Hilfe eines am einlaßseitigen Zylinderende befestigten, hydraulisch angetriebenen Schneckenantriebs 14 komprimiert, durchmischt und zum anstragsseitigen Zylinderende befördert wird, von wo die Kunststoffschmelze taktsynchron zum Schließzustand in das Formwerkzeug 2 eingefüllt wird.

Damit das Werkzeug 2 beim Füllen eine hinreichend hohe Temperatur aufweist, wird es taktabhängig wechselweise beheizt, und nach dem Füllen wird es gekühlt, um eine möglichst rasche Erstarrung und Entformbarkeit des Formteils zu erzielen. Zu diesem Zweck wird das Spritzgießwerkzeug 2 alternierend einem Heiz- und einem Kühlmittelkreislauf 16 bzw. 18 zugeschaltet.

Die Hydraulikantriebe 4 und 14 werden von einer leistungsstarken, elektrohydraulischen Zentraleinheit 20 mit Druckmittel versorgt. Zum Schutz vor Überhitzungen müssen sowohl die Zentraleinheit 20 als auch der Schneckenantrieb 14, der über einen Anschlußflansch 22 am einlaßseitigen Zylinderende befestigt ist, gekühlt werden. Zur Rückgewinnung der dabei freigesetzten thermischen Energie ist die Spritzgießmaschine mit einem Wärmetransportsystem 24 in Form eines im geschlossenen Kreislauf wasserdurchströmten Rohrsystems einschließlich einer Umwälzpumpe 26 ausgestattet. Im Zuge des Wärmetransportsystems 24 befindet sich ein erster Wärmetauscher 28 zur Kühlung des Schneckenantriebs 14 im Bereich des Anschlußflansches sowie ein zweiter Wärmetauscher 30, der die Kühlung der Zentraleinheit 20 übernimmt. Die so an das Wärmetransportsystem 24 überführte Abwärme wird über einen weiteren Wärmetauscher 32 im Einfülltrichter 12 an das Kunststoffgranulat abgegeben, so daß dieses unmittelbar vor dem Einzug in den Plastifizierzylinder 10 vorerhitzt wird. Hierdurch werden die sonst vorhandenen Energieverluste an den Antrieben 14 und 20 als Nutzwärme zur Erhöhung der Rohstoff-Eingangstemperatur in den Spritzgießprozeß zurückgeführt und dadurch der zum Aufschmelzen des Kunststoffmaterials erforderliche Energieverbrauch der Heizelemente 6 deutlich reduziert. Zugleich verkürzt sich die Aufschmelzstrecke im Plastifizierzylinder 10, was neben einer Verringerung der Baulänge den weiteren Vorteil erbringt, daß sich die Plastifizierleistung des Schneckenantriebs 14 wegen der geringeren Kompression im Bereich der Aufschmelzstrecke erhöht.

## Patentansprüche

1. Kunststoff-Spritzgießmaschine, bestehend aus einem beheizten Plastifizierzylinder für das zu verspritzende Kunststoffmaterial und einem mit diesem befüllbaren Spritzgießwerkzeug einschließlich eines Maschinenantriebs,
**dadurch gekennzeichnet, daß**
zur Energierückgewinnung ein zwischen Maschinenantrieb (14, 20) und Einlaßseite des Plastifizierzylinders (10) wirksames, das Kunststoffmaterial mit der Abwärme des Maschinenantriebs vorheizendes Wärmetransportsystem (24) vorgesehen ist.

2. Spritzgießmaschine nach Anspruch 1, bei der der Maschinenantrieb eine elektro-hydraulische Motor-Pumpeneinheit enthält,
**dadurch gekennzeichnet, daß**
das Wärmetransportsystem (24) mit der Abwärme der Motor-Pumpeneinheit (20) beheizt ist.

3. Spritzgießmaschine nach Anspruch 1 oder 2, bei der der Maschinenantrieb einen am einlaßseitigen Zylinderende des Plastifizierzylinders befestigten Schneckenantrieb enthält,
**dadurch gekennzeichnet, daß**
das Wärmetransportsystem (24) mit dem Schneckenantrieb (14) im Anschlußbereich zum Plastifizierzylinder (10) wärmeaufnehmend verkoppelt ist.

4. Spritzgießmaschine nach einem der vorhergehenden Ansprüche,
**gekennzeichnet durch**
Vorheizen des Kunststoffmaterials im Einfülltrichter (12) des Plastifizierzylinders (10).

5. Spritzgießmaschine nach einem der vorhergehenden Ansprüche,
**dadurch gekennzeichnet, daß**
als Wärmetransportsystem (24) ein im geschlossenen Kreislauf wasserdurchströmtes Rohrsystem vorgeschen ist.
